# EUROPEAN PATENT SPECIFICATION

(11) **EP 4 205 022 B1**
(45) Date of publication and mention of the grant of the patent: **11.11.2026**
(21) Application number: 21786725.8
(22) Date of filing: 27.08.2021
(51) Int. Cl.: G06V 40/10, G06V 20/52, G06V 10/764, G06F 18/2433

(54) **CLASSIFICATION OF PERSON TYPE IN A VISUAL MEDIUM**
KLASSIFIZIERUNG DES PERSONENTYPS IN EINEM VISUELLEN MEDIUM
CLASSIFICATION D'UN TYPE DE PERSONNE DANS UN SUPPORT VISUEL

(30) Priority: 28.08.2020 US 202017006468
(43) Date of publication of application: 05.07.2023
(73) Proprietor: Sensormatic Electronics LLC, Boca Raton, FL 33487 (US)
(72) Inventor: STEWART, Michael C., Boca Raton, Florida 33487 (US); CELI, Joseph, Boca Raton, Florida 33487 (US); SUBRAMANIAN, Gopi, Boca Raton, Florida 33487 (US)
(74) Representative: Meissner Bolte Nürnberg
(86) International application number: PCT/US2021/071301
(87) International publication number: WO 2022/047491

(56) References cited:
- US-A1- 2020 258 023
- MARROQUIN ROBERTO ET AL: "WiseNET: An indoor multi-camera multi-space dataset with contextual information and annotations for people detection and tracking", DATA IN BRIEF, vol. 27, 16 October 2019 (2019-10-16), pages 104654, XP055864083, ISSN: 2352-3409, DOI: 10.1016/j.dib.2019.104654
- WANG DYLAN ET AL: "Using Deep Learning to Solve Google reCAPTCHA v2's Image Challenges", 2020 14TH INTERNATIONAL CONFERENCE ON UBIQUITOUS INFORMATION MANAGEMENT AND COMMUNICATION (IMCOM), IEEE, 3 January 2020 (2020-01-03), pages 1 - 5, XP033718392, DOI: 10.1109/IMCOM48794.2020.9001774
- BRYAN C RUSSELL ET AL: "LabelMe: A Database and Web-Based Tool for Image Annotation", INTERNATIONAL JOURNAL OF COMPUTER VISION, KLUWER ACADEMIC PUBLISHERS, BO, vol. 77, no. 1-3, 31 October 2007 (2007-10-31), pages 157 - 173, XP019581885, ISSN: 1573-1405
- AMSALEG LAURENT ET AL: "The VIA Annotation Software for Images, Audio and Video", MM '19: PROCEEDINGS OF THE 27TH ACM INTERNATIONAL CONFERENCE ON MULTIMEDIA, 25 October 2019 (2019-10-25), 2 Penn Plaza, Suite 701New YorkNY10121-0701USA, pages 2276 - 2279, XP055863572, ISBN: 978-1-4503-6889-6, Retrieved from the Internet <URL:https://dl.acm.org/doi/pdf/10.1145/3343031.3350535> DOI: 10.1145/3343031.3350535

## Description

### TECHNICAL FIELD

The described aspects relate to image classification systems.

### BACKGROUND

Aspects of the present disclosure relate generally to image classification systems, and more particularly, to classifying person type in a visual medium.

Modern image classification systems are able to distinguish between various objects. For example, a machine learning model that is trained to distinguish between cats and dogs may successfully do so when provided with a sufficient training database of images. For an average user, however, the accessibility to set up custom image classification systems is limited - especially in niche situations.

For example, in the context of a workplace, suppose that an owner of a department store seeks to evaluate employee performance. The owner may set up a camera to detect when an employee enters the frame and monitor the employee's activity. Given that several customers may also be at the department store, it becomes important to distinguish between employees and non-employees. In this scenario, the owner cannot simply use an arbitrary employee image classification system because the system may be trained on a very different set of training images and/or may require a specific type of input image. In terms of setting up his/her own image classification system, generating a training database without knowing how many images are needed, the compatibility of the model, and the types of scenarios to capture is cumbersome even for a person who understands machine learning, let alone for a person who does not. Marroquin Roberto et al.: "WiseNET: An indoor multi-camera multi-space dataset with contextual information and annotations for people detection and tracking", DATA IN BRIEF, vol. 27, October 16, 2019, describes a dataset providing multi-camera multi-space video sets along with contextual information of the environment. In this document, it is further described that people detector Histogram of Oriented Gradients as well as two CNN-based object detector models are used. On each video set according to this document, a unique ID should be associated to each person. Further, this document discloses a bounding box (Bbox) which should be created by selecting its top-left and bottom-right corners. Furthermore, the document discloses a model which was trained on a COCO dataset (Common Objects in Context). Even further, it is described that the dataset was made publicly available.

Accordingly, there exists a need for improvements in image classification systems.

### SUMMARY

The invention is defined by the annexed claims. Embodiments of the invention result from the dependent claims and the below description.

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

An example implementation includes a method for classifying a predetermined person type in a visual medium, comprising detecting a person in an image using image classification. The method further includes generating, on the image, a visual boundary around the detected person. Additionally, the method further includes dividing the image into a plurality of image portions such that multiple images portions partially depict the detected person inside the visual boundary. Additionally, the method further includes generating, for display, the plurality of image portions on a user interface that prompts a user to select each portion, of the plurality of image portions, that at least partially depicts a person of a predetermined type. Additionally, the method further includes receiving a selection of at least one portion in the divided image via the user interface. Additionally, the method further includes generating, for a machine learning model and in response to determining that the selection comprises the detected person inside the visual boundary, a training input that comprises a training image depicting contents inside the visual boundary and a tag indicating that the detected person inside the visual boundary is of the predetermined type. Additionally, the method further includes storing the training input in memory. Further, the method comprises vectorizing the training input to create a training vector, and training the machine learning model to identify the person of the predetermined type in an input image using the training vector. Furthermore, the method comprises detecting another person in a different image using image classification. Even further, the method comprises determining, using the machine learning model, whether the another person is of the predetermined type.

Another example implementation includes an apparatus for classifying a predetermined person type in a visual medium, comprising a memory and a processor in communication with the memory. The processor is configured to detect a person in an image using image classification. The processor is further configured to generate, on the image, a visual boundary around the detected person. Additionally, the processor is further configured to divide the image into a plurality of image portions such that multiple images portions partially depict the detected person inside the visual boundary. Additionally, the processor is further configured to generate, for display, the plurality of image portions on a user interface that prompts a user to select each portion, of the plurality of image portions, that at least partially depicts a person of a predetermined type. Additionally, the processor is further configured to receive a selection of at least one portion in the divided image via the user interface. Additionally, the processor is further configured to generate, for a machine learning model and in response to determining that the selection comprises the detected person inside the visual boundary, a training input that comprises a training image depicting contents inside the visual boundary and a tag indicating that the detected person inside the visual boundary is of the predetermined type. Additionally, the processor is further configured to store the training input in memory. Further, the processor is configured to vectorize the training input to create a training vector, and to train the machine learning model to identify the person of the predetermined type in an input image using the training vector. Furthermore, the processor is configured to detect another person in a different image using image classification. Even further, the processor is configured to determine, using the machine learning model, whether the another person is of the predetermined type.

Another example implementation includes a computer-readable medium for classifying a predetermined person type in a visual medium, executable by a processor to perform the method of any one of claims 1 to 7.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The accompanying drawings, which are incorporated into and constitute a part of this specification, illustrate one or more example aspects of the present disclosure and, together with the detailed description, serve to explain their principles and implementations.
Fig. 1 is a diagram of a user interface utilized for classifying person type in a visual medium, in accordance with exemplary aspects of the present disclosure.
Fig. 2 is a diagram depicting persons in an image being classified based on type, in accordance with exemplary aspects of the present disclosure.
Fig. 3 is a block diagram of a computing device executing a person type identifier component, in accordance with exemplary aspects of the present disclosure.
Fig. 4 is a flowchart illustrating a method of classifying person type in a visual medium, in accordance with exemplary aspects of the present disclosure.
Fig. 5 is a flowchart illustrating a method of monitoring a person of a classified type, in accordance with exemplary aspects of the present disclosure.
Fig. 6 is a flowchart illustrating a method of verifying a person type classification, in accordance with exemplary aspects of the present disclosure.
Fig. 7 is a flowchart illustrating a method of filtering potential training images based on person visibility, in accordance with exemplary aspects of the present disclosure.

### DETAILED DESCRIPTION

Various aspects are now described with reference to the drawings. In the following description, for purposes of explanation, numerous specific details are set forth in order to provide a thorough understanding of one or more aspects. It may be evident, however, that such aspect(s) may be practiced without these specific details.

The present disclosure includes apparatuses and methods that allow users to immediately set up custom image classification systems, particularly for niche scenarios such as classifying a type of person in an image or video. For example, the apparatuses and methods enable a streamlined approach of generating, via a user interface, a training dataset of images for a person of any type, and implementing a machine learning model that can then classify persons based on the generated training dataset.

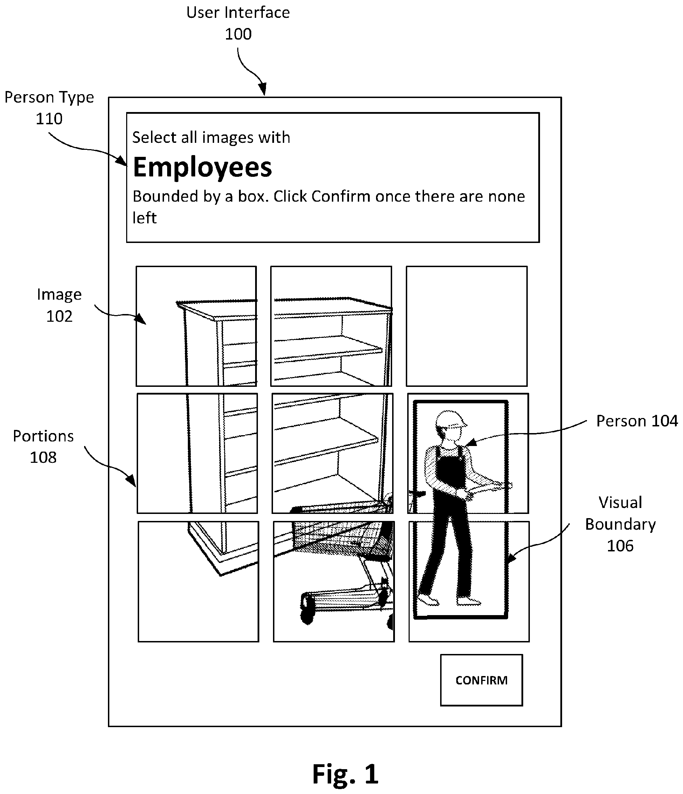

Fig. 1 is a diagram of user interface 100 utilized for classifying person type in a visual medium, in accordance with exemplary aspects of the present disclosure. User interface 100 provides an accessible approach to generate a training database for a custom image classification system, particularly one that classifies person type.

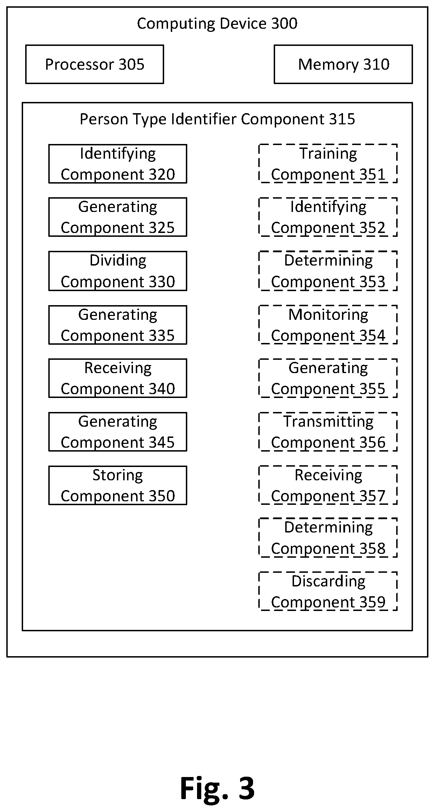

Revisiting the example provided in the background of the present disclosure, an owner of a department store may set up a security camera that collects videos and images, and uploads them to a computing device (e.g., computing device 300 described in Fig. 3). In some aspects, the computing device may be an electronic device capable of processing images and communicating information to other computing devices (e.g., a server, a smartphone, a laptop, a desktop, etc.). The uploading process may be wireless (e.g., via Wi-Fi or Bluetooth) or wired (e.g., via an Ethernet cable). The computing device may determine whether a received image has a person (e.g., person 104) and in response to detecting person 104, may generate visual boundary 106 around person 104. The computing device may then divide image 102 into a plurality of portions 102 such that visual boundary 106 is split across multiple portions. In Fig. 1, visual boundary 106 is found in the bottom-right two portions.

Subsequently, the computing device may generate user interface 100 for display. The generating may be performed on a display of the computing device itself, or of a different computing device. For example, the computing device may be a server and the different computing device may be the smartphone of the owner. Having already classified person 104 as a human, the purpose of user interface 100 is to prompt the user to identify and select a sub-class of person 104. In this case, user interface 100 prompts the user to select all portions of the divided image 102 that depict a person of type 110 (i.e., an employee). It should be noted that an administrator of the computing device may change type 110. For example, type 110 may be changed to "customer," thus prompting users to identify non-employees.

Visual boundary 106 allows the user to easily identify points of interest such as person 104 in image 102. This visual accessibility is further enhanced by dividing visual boundary 106 and its contents (i.e., image of person 104) across multiple portions. A user is thus informed of the possible candidates in image 102 that can be employees. A person standing in the background of image 102 that is difficult to make out would therefore not be bounded, nor selected, and in turn, would not throw off a machine learning model learning from the provided input data. The computing device receives the user's selection of portions when the user selects "confirm" on user interface 100. For example, the user may select the two portions that comprise visual boundary 106. It should be noted that even if the user selects only one of the two portions, the computing device may still identify person 104 as an employee, given that visual boundary 106 spans two portions (i.e., the non-selected portion is automatically selected because the computing device recognizes person 104 is a human).

User interface 100 thus yields a training input that features the contents of visual boundary 106 and a tag indicating that person 104 is an employee. This training input can be used to train a machine learning model to distinguish between employees and non-employees. In some aspects, the machine learning model may be a one-class support vector machine (SVM). Thus, only one training input would be necessary to initiate a user's custom image classification system.

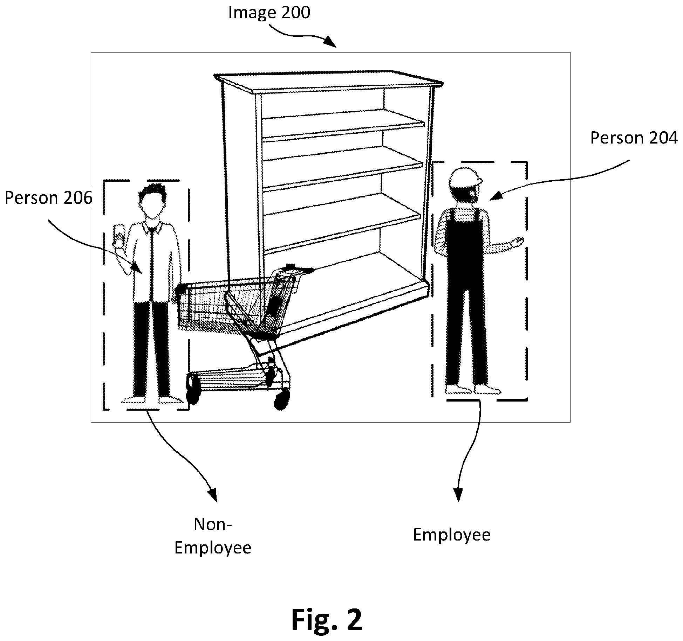

Fig. 2 is a diagram depicting persons in image 200 being classified based on type, in accordance with exemplary aspects of the present disclosure. Image 200 depicts a customer and an employee in a department store. Image 200 may be captured from the same security camera that captured image 102. In some aspects, image 200 may be captured from a different camera that can communicate with the computing device.

Suppose that image 200 is inputted into the trained machine learning model (e.g., the one-class SVM). Having known what an employee looks like based on the provided training input of person 104 (see Fig. 1), the trained machine learning model may determine that person 204 is an employee and person 206 is not an employee. Furthermore, the trained machine learning model may be retrained with both the original training input and the new image of person 204. This allows for the trained machine learning model to dynamically improve as more images of employees are made available and to adapt to employee uniform changes over time.

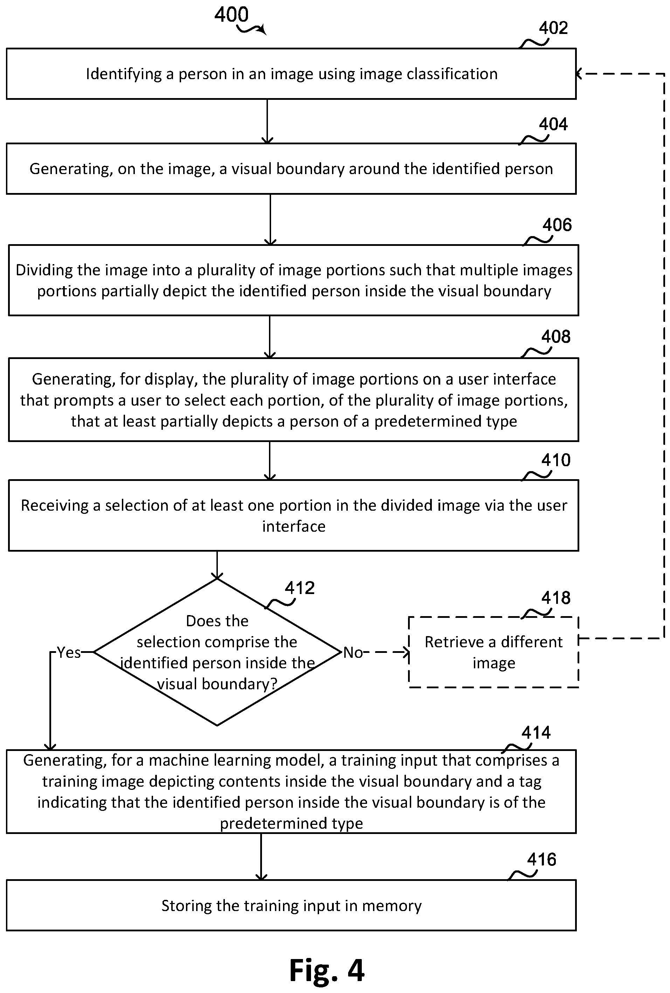

Fig. 3 is a block diagram of computing device 300 executing a person type identifier component, in accordance with exemplary aspects of the present disclosure. Fig. 4 is a flowchart illustrating method 400 of classifying person type in a visual medium, in accordance with exemplary aspects of the present disclosure.

Referring to Fig. 3 and Fig. 4, in operation, computing device 300 may perform a method 400 of classifying person type in a visual medium via execution of person type identifier component 315 by processor 305 and/or memory 310.

At block 402, the method 400 includes identifying a person in an image using image classification. For example, in an aspect, computer device 300, processor 305, memory 310, person type identifier component 315, and/or identifying component 320 may be configured to or may comprise means for identifying a person in an image using image classification.

For example, the identifying at block 402 may include utilizing a pre-trained machine learning model or computer vision techniques to determine whether a frame in a video or a standalone image depicts a person. It should be noted that "person" is a class while "employee" and "non-employees" are sub-classes. The present aspects first classify a person, in general, utilizing any type of person classification model. One of the goals of the present disclosure is to provide a user with the ability to build a training database for a custom machine learning model. Because identifying component 320 automatically identifies a person, the user does not have to manually assess whether an image properly depicts a person for later classification into the sub-classes.

At block 404, the method 400 includes generating, on the image, a visual boundary around the identified person. For example, in an aspect, computer device 300, processor 305, memory 310, person type identifier component 315, and/or generating component 325 may be configured to or may comprise means for generating, on the image, a visual boundary around the identified person.

For example, the generating at block 404 may generate a shape, such as a rectangle, around person 104 in image 102. Generating component 325 may identify one or more boundaries of an image of a person, and then may create one or more boundary lines associated with such boundaries. For example, generating component 325 may attempt to generate the smallest visual boundary possible that fully outlines a body of the person 104. In some optional aspects, the ratio of the dimensions of the visual boundary may be constant for all identified persons (e.g., 3:6). This allows person type identifier component 315 to be a universal software that is compatible with any image. Suppose that the owner of the department store has two cameras set up. Both cameras may communicate with person type identifier component 315 and provide images such as image 102. One camera may be configured to capture 720 pixel images while the other camera may capture images in 4K. Despite the different resolutions, the training images of employees (which only include the pixels inside the visual body) generated by person type identifier component 315 will be the same ratio and can be scaled to the same size. This results in a consistent training database where all images are of the same aspect ratio and size.

At block 406, the method 400 includes dividing the image into a plurality of image portions such that multiple images portions partially depict the identified person inside the visual boundary. For example, in an aspect, computer device 300, processor 305, memory 310, person type identifier component 315, and/or dividing component 330 may be configured to or may comprise means for dividing the image into a plurality of image portions such that multiple images portions partially depict the identified person inside the visual boundary.

For example, the dividing at block 406 may include determining a size of image 102 and a size of visual boundary 106. In order to split contents of visual boundary 106 across multiple portions 108, dividing component 330 may determine dimensions of an individual portion that (1) the dimensions of image 102 are divisible by and (2) are smaller than the dimensions of visual boundary 106. For example, the dimensions of image 102 may be 1200×700 pixels and the dimensions of visual boundary 106 may be 300x600 pixels. Dividing component 330 determines a size that is less than 300 (the shortest length of visual boundary 106) and that 1200, 700, 600, and 300 are divisible by. In this particular example, dividing component 330 may divide image 102 into a plurality of portions that are each 100x100 pixels. It should be noted that this is merely an example. In some aspects, dividing component 330 may determine the largest size possible for the portion (that also meets the criteria discussed above) to reduce the number of selections that the user has to make.

At block 408, the method 400 includes generating, for display, the plurality of image portions on a user interface that prompts a user to select each portion, of the plurality of image portions, that at least partially depicts a person of a predetermined type. For example, in an aspect, computer device 300, processor 305, memory 310, person type identifier component 315, and/or generating component 335 may be configured to or may comprise means for generating, for display, the plurality of image portions on a user interface that prompts a user to select each portion, of the plurality of image portions, that at least partially depicts a person of a predetermined type.

For example, the generating at block 408 may include converting the data representing the image, image portions, and each boundary into a user interface 100 on a computing device. The computing device may be device 300 or any device that can communicate with device 300. As discussed previously, user interface 100 provides an accessible way for a user to quickly set up a custom image recognition system by enabling manual confirmation of whether person 104 is of person type 110.

At block 410, the method 400 includes receiving a selection of at least one portion in the divided image via the user interface. For example, in an aspect, computer device 300, processor 305, memory 310, person type identifier component 315, and/or receiving component 340 may be configured to or may comprise means for receiving a selection of at least one portion in the divided image via the user interface. Suppose that user interface 100 is generated on a touch screen smartphone. The user may select, via the touch screen, the two portions of image 102 that comprise visual boundary 106. In some aspects, user interface 100 may be generated on a desktop and that user may select the two portions using a mouse or keyboard inputs.

At block 412, the method 400 includes determining whether the selection comprises the identified person inside the visual boundary. For example, in an aspect, computer device 300, processor 305, memory 310, person type identifier component 315, and/or receiving component 340 may be configured to or may comprise means for determining whether the selection comprises the identified person inside the visual boundary.

For example, receiving component 340 may determine whether person 104 is depicted in at least one of the selected portions (i.e., are the pixels marked as making up the contents of visual boundary 106 included in the selected portions).

In response to determining that the selection includes the identified person, method 400 advances to block 414, where the method 400 includes generating, for a machine learning model, a training input that comprises a training image depicting contents inside the visual boundary and a tag indicating that the identified person inside the visual boundary is of the predetermined type. For example, in an aspect, computer device 300, processor 305, memory 310, person type identifier component 315, and/or generating component 345 may be configured to or may comprise means for generating, for a machine learning model, a training input that comprises a training image depicting contents inside the visual boundary and a tag indicating that the identified person inside the visual boundary is of the predetermined type.

In some aspects, the machine learning model is a one-class support vector machine. Accordingly, the model is trained on images depicting a single class of objects (e.g., images of persons of type 110) and simply determines whether any arbitrary image depicts persons of type 110 or not. The machine learning model may be configured to receive an input image and an input tag classifying the image, and generate a function (e.g., dot product with weights) that converts the input image to the input tag. This function is then applied to other images to determine new tags indicating whether the other images depict persons of person type 110 or not. In this case, generating component 345 recognizes that person 104 is of type 110 (e.g., an employee) and generates a training input comprising a cropped version of image 102 that only depicts the contents bounded by visual boundary 106 and a tag indicating that the cropped version of image 102 depicts an employee.

At block 416, the method 400 includes storing the training input in memory 310. For example, in an aspect, computer device 300, processor 305, memory 310, person type identifier component 315, and/or storing component 350 may be configured to or may comprise means for storing the training input in memory 310. Accordingly, person type identifier component 315 is able to build a training image database in memory 310.

If at block 412, person type identifier component 315 and/or receiving component 340 determines that the selection does not comprise the identified person, method 400 advances to block 418, where person type identifier component 315 retrieves a different image. For example, the user may not make a selection of any portion of image 102 (because no employees are shown), or may select a portion that person type identifier component 315 determines does not include a person based on its image classification system for identifying humans. In response, person type identifier component 315 generates a different image on user interface 100 for the user to interact with. More specifically, method 400 returns to block 402, where identifying component 320 identifies another person in a different image. The loop between block 402 and 418 may continue until the user closes user interface 100. In some aspects, subsequent to executing block 416, method 400 advances to 418 as well. This allows multiple training inputs to be saved in memory 310.

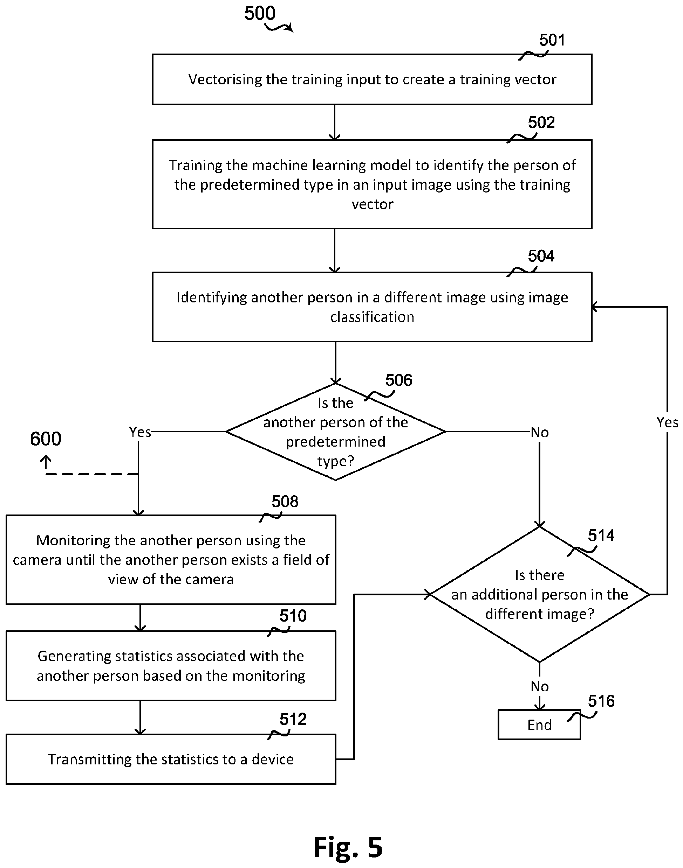

Fig. 5 is a flowchart illustrating method 500 of monitoring a person of a classified type, in accordance with exemplary aspects of the present disclosure. In an optional aspect, method 500 may be performed after method 400 is complete. Referring to Fig. 5, at block 501, the method 500 may include vectorizing the training input to create a training vector. For example, in an aspect, computer device 300, processor 305, memory 310, person type identifier component 315, and/or training component 351 may be configured to or may comprise means for vectorizing the training input to create a training vector.

In an example where the predetermined type (i.e., type 110) is an "employee," vectorizing the stored training input to create the training vector may include identifying at least one feature of the training input for inclusion in the training vector. For example, training component 351 may retrieve the training image from memory 310 and convert the matrix of pixels into a vector that mathematically represents select features of the training image. The at least one feature may be one or more of an outline of an employee uniform, a color representation of the employee uniform, a logo on the employee uniform, or presence of a nametag. For example, referring to Fig. 1, training component 351 may capture the dominant color in various regions of visual boundary 106 (e.g., a black uniform of person 104, a yellow hat on person 104, etc.), or may capture, via edge detection, the shape of the employee's uniform. The captured information representing the select features may be stored in a training vector (or any appropriate data structure) that a classifying function can be applied on. For simplicity, the classifying function may be a dot product between the training vector and a vector of learned weights. The result of the dot product may be a value such as 1 or -1 representing "employee" and "non-employee," respectively.

At block 502, the method 500 may include training the machine learning model to identify the person of the predetermined type in an input image using the training vector. For example, in an aspect, computer device 300, processor 305, memory 310, person type identifier component 315, and/or training component 351 may be configured to or may comprise means for training the machine learning model to identify the person of the predetermined type in an input image using the training vector.

For example, training component 351 may determine a vector of learned weights that result in a known output. Through user interface 100, training component 351 receives a tag indicating that the training input depicts an employee. If the sub-class "employee" is represented by the value "1," training component 351 learns a vector of weights that results in a dot product of 1 when applied on the training vector. This vector of weights is later used on new input images. It should be noted that the dot product is a simplified example of the function utilized in the machine learning model. One skilled in the art will appreciate that the function and method of reducing error (e.g., gradient descent) may differ based on the machine learning model used.

At block 504, the method 500 may further include identifying another person in a different image using image classification. For example, in an aspect, computer device 300, processor 305, memory 310, person type identifier component 315, and/or identifying component 352 may be configured to or may comprise means for identifying another person in a different image using image classification. For example, the identifying at block 504 may involve identifying person 204 of image 200.

At block 506, the method 360 may further include determining, using the machine learning model, whether the another person is of the predetermined type. For example, in an aspect, computer device 300, processor 305, memory 310, person type identifier component 315, and/or determining component 353 may be configured to or may comprise means for determining, using the machine learning model, whether the another person is of the predetermined type. For example, determining component 353 may generate a visual boundary around person 204, generate a cropped version of image 200 comprising only the contents of the visual boundary, vectorize the cropped version of image 200, and apply the classifying function using the vector of learned weights.

In response to determining that the another person is of the predetermined type (e.g., type 110), method 500 may advance to block 508, or may optionally advance to method 600.

At block 508, the method 500 may further include monitoring the another person using the camera until the another person exists a field of view of the camera. For example, in an aspect, computer device 300, processor 305, memory 310, person type identifier component 315, and/or monitoring component 354 may be configured to or may comprise means for monitoring, in response to determining that the another person is of the predetermined type, the another person using the camera until the another person exists a field of view of the camera.

For example, the monitoring at block 508 may include tracking where person 204 moves in the field of view of the security camera installed by the owner of the department store.

In this optional aspect, at block 510, the method 500 may further include generating statistics associated with the another person based on the monitoring. For example, in an aspect, computer device 300, processor 305, memory 310, person type identifier component 315, and/or generating component 355 may be configured to or may comprise means for generating statistics associated with the another person based on the monitoring.

For example, the generating at block 510 may include determining how long person 204 remains idle, how long person 204 is in the proximity of a non-employee such as person 206 (indicating customer interaction), the locations that person 204 most frequents in the environment, etc.

In this optional aspect, at block 512, the method 500 may further include transmitting the statistics to a device. For example, in an aspect, computer device 300, processor 305, memory 310, person type identifier component 315, and/or transmitting component 356 may be configured to or may comprise means for transmitting the statistics to a device.

For example, the transmitting at block 512 may include sending, e.g., from a modem or transmitter via a wired or wireless communication link, the various statistics to a device of the owner of the department store. This allows the owner to evaluate employee performance through an objective lens.

Suppose that at 506, determining component 353 determines that the another person is not of the predetermined type. In response, method 500 may advance to 514, where person type identifier component 315 and/or identifying component 352 may determine whether there is an additional person in the different image. For example, identifying component 352 may first identify person 206 and may determine that person 206 is not of type 110 (i.e., is a non-employee).

If it is determined that there is an additional person in the different image (e.g., person 204), method 500 returns to 504, where person type identifier component 315 and/or identifying component 352 identifies the additional person. Method 500 then proceeds in the loop between 504 and 514 until all persons in the different image (e.g., image 200) have been classified as either of or not of the predetermined type. When no additional persons are left in the different image, method 500 ends at 516. In the context of a video, person type identifier component 315 may determine whether a person of type 110 exists in every other select number of frames. For example, component 315 may evaluate every 300^{th} frame in a video that is 60 frames per second. The frame number can be adjusted by an administrator.

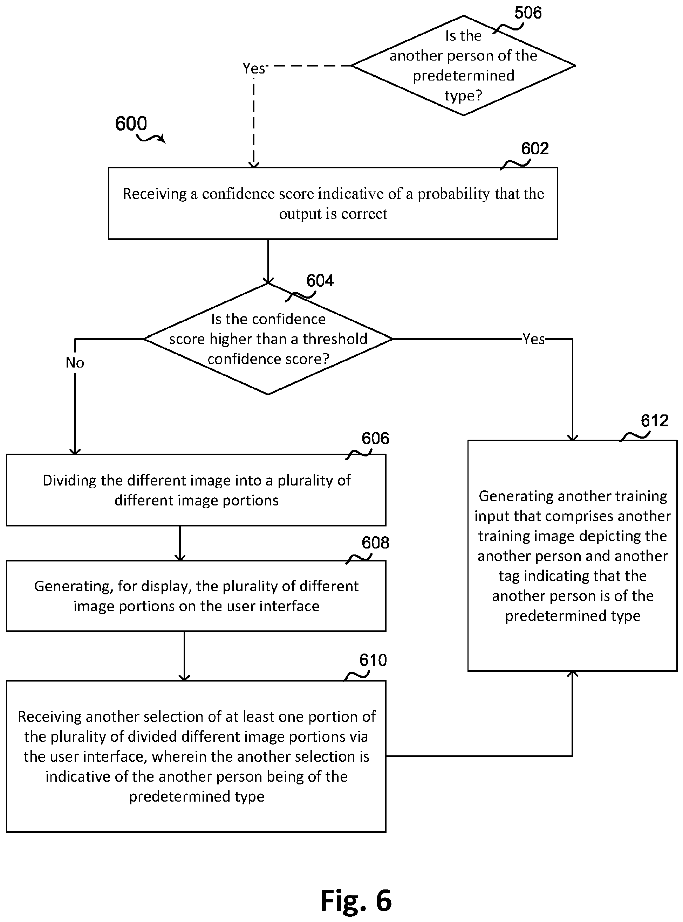

Fig. 6 is a flowchart illustrating method 600 of verifying a person type classification, in accordance with exemplary aspects of the present disclosure. This optional aspect may be implemented subsequent to determining that the another person is of the predetermined type in block 506 of method 500.

At block 602, the method 600 may include receiving a confidence score indicative of a probability that the output is correct. For example, in an aspect, computer device 300, processor 305, memory 310, person type identifier component 315, and/or receiving component 357 may be configured to or may comprise means for receiving a confidence score indicative of a probability that the output is correct.

For example, the machine learning model may output a probability (e.g., 60%) of being correct. In some scenarios, a non-employee may look very similar to an employee. For example, a non-employee may wear an outfit that is similar to an employee's uniform. To prevent incorrect classifications, a confidence score is outputted by the machine learning model that can be useful in determining whether more training is necessary. In some aspects, the confidence score is a numerical representation of the deviation between the training images used to train the machine learning model and the image of person being classified.

In this optional aspect, at block 604, the method 360 may further include determining whether the confidence score is higher than a threshold confidence score. For example, in an aspect, computer device 300, processor 305, memory 310, person type identifier component 315, and/or receiving component 357 may be configured to or may comprise means determining whether the confidence score is higher than a threshold confidence score.

For example, the threshold confidence score may be a configurable value, such as but not limited to 80%, set by an administrator. If a confidence score is lower than this value, the output may not be trustworthy. Thus, in response to determining that the confidence score is not higher than the threshold confidence score, person type identifier component 315 verifies the output from the machine learning model by implementing steps in blocks 606, 608, and 610.

In this optional aspect, at block 606, the method 600 may further include dividing the different image into a plurality of different image portions. For example, in an aspect, computer device 300, processor 305, memory 310, person type identifier component 315, and/or dividing component 330 may be configured to or may comprise means for dividing the different image into a plurality of different image portions.

As an example, and referring back to Fig. 2, the machine learning model may classify person 204 as an employee, but the associated confidence score may be 70%. This probability is determined based on the deviation between the training images used to train the machine learning model and the image of person 204. The deviation may be enough to guess that person 204 is not a non-employee, but may not be enough to fully confirm as such. Because the confidence score is less than the threshold confidence score of 80%, person type identifier component 315 utilizes the same method of generating training images for the machine learning model. For example, dividing component 330 may divide image 200 for presentation on user interface 100.

At block 608, the method 600 may further include generating, for display, the plurality of different image portions on the user interface. For example, in an aspect, computer device 300, processor 305, memory 310, person type identifier component 315, and/or generating component 335 may be configured to or may comprise means for generating, for display, the plurality of different image portions on user interface 100.

At block 610, the method 600 may further include receiving another selection of at least one portion of the plurality of divided different image portions via the user interface, wherein the another selection is indicative of the another person being of the predetermined type. For example, in an aspect, computer device 300, processor 305, memory 310, person type identifier component 315, and/or receiving component 340 may be configured to or may comprise means for receiving another selection of at least one portion of the plurality of divided different image portions (of image 200) via user interface 100, wherein the another selection is indicative of the another person (e.g., person 204) being of the predetermined type.

For example, a user may select portions of image 200 on user interface 100 that comprise person 204. Based on this confirmation that person 204 is indeed of type 110 (as also determined by the machine learning model), at block 612, the method 600 may further include generating, in response to determining that the another selection comprises the another person, another training input that comprises another training image depicting the another person and another tag indicating that the another person is of the predetermined type. For example, in an aspect, computer device 300, processor 305, memory 310, person type identifier component 315, and/or generating component 345 may be configured to or may comprise means for generating, in response to determining that the another selection comprises the another person, another training input that comprises another training image depicting the another person and another tag indicating that the another person is of the predetermined type.

In the event that the selection does not comprise person 204, person type identifier component 315 determines that the machine learning model misclassified. In this case, the another training input may still be generated, but the tag will indicate that the another person (i.e., person 204) is not of type 110. In this case, the machine learning model is retrained such that for this particular training input, the vector of learned weights yields - 1 when the classifying function is applied and for all other training inputs depicting employees, the vector of learned weights yields 1.

If at block 604, person type identifier component 315 determines that the confidence score is higher than the threshold confidence score, person type identifier component 315 may not verify the output of the machine learning model and method 600 may advance directly to block 612 from block 604.

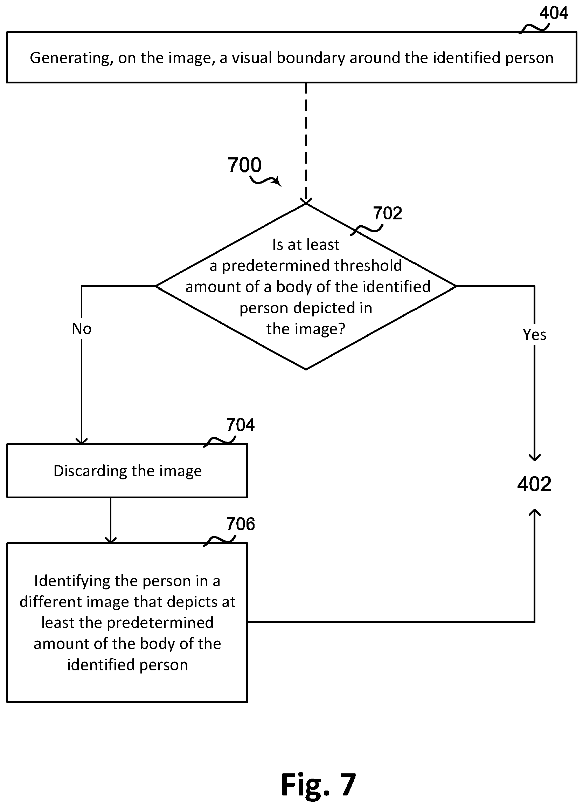

Fig. 7 is a flowchart illustrating method 700 of filtering potential training images based on person visibility, in accordance with exemplary aspects of the present disclosure. This optional aspect may be implemented by person type identifier component 315 subsequent to implementing block 404 of method 400.

At block 702, the method 700 may further include determining whether at least a predetermined amount of a body of the identified person is depicted in the image. For example, in an aspect, computer device 300, processor 305, memory 310, person type identifier component 315, and/or determining component 358 may be configured to or may comprise means for determining, prior to dividing the image, whether at least a predetermined amount of a body of the identified person is depicted in the image.

For example, the determining at block 702 may include determining whether the arms, legs, torso, and head of a person are clearly visible in image. The predetermined amount may comprise at least one of the two arms, at least one of the two legs, a torso, and a head. If at least the predetermined amount is not adequately depicted (e.g., the body is out of frame, cropped, or is behind some obstruction), using the image to train the machine learning model may yield undesirable results. Method 700 enables person type identifier component 315 to filter good training images from poor ones.

If at block 702, person type identifier component 315 determines that at least the predetermined threshold amount of the body is not depicted (or is not visible), method 700 advances to 704. In this optional aspect, at block 704, the method 700 may further include discarding the image. For example, in an aspect, computer device 300, processor 305, memory 310, person type identifier component 315, and/or discarding component 359 may be configured to or may comprise means for discarding the image. This prevents the image from being used for training purposes. It should be noted that discarding, in the context of the present disclosure, means to remove from consideration as a training image. The image may not necessarily be deleted.

In this optional aspect, at block 706, the method 700 may further include identifying the person in a different image that depicts at least the predetermined amount of the body of the identified person. For example, in an aspect, computer device 300, processor 305, memory 310, person type identifier component 315, and/or identifying component 320 may be configured to or may comprise means for identifying the person in a different image that depicts at least the predetermined amount of the body of the identified person.

For example, the identifying at block 706 may include receiving a new image. The new image may be a subsequent frame in an input video. The discarded image may partially depict person 204 entering the frame, while the subsequent frame may depict person 204's entire body. Thus, the subsequent frame is used in block 402 to identify person 204 because at least the predetermined amount of person 204's body is shown.

Subsequent to implementing block 706, method 700 advances to block 402 of method 400. If at block 702, person type identifier component 315 determines that at least the predetermined threshold amount of the body is depicted (or is visible), method 700 also advances to block 402 of method 400. In this case, the image is usable for training purposes and does not have to be discarded.

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

## Claims

1. A method for classifying a predetermined person type in a visual medium, comprising:
- detecting a person in an image using image classification;
- generating, on the image, a visual boundary around the detected person;
- dividing the image into a plurality of image portions such that multiple images portions partially depict the detected person inside the visual boundary;
- generating, for display, the plurality of image portions on a user interface that prompts a user to select each portion, of the plurality of image portions, that at least partially depicts a person of a predetermined type;
- receiving a selection of at least one portion in the divided image via the user interface;
- generating, for a machine learning model and in response to determining that the selection comprises the detected person inside the visual boundary, a training input that comprises a training image depicting contents inside the visual boundary and a tag indicating that the detected person inside the visual boundary is of the predetermined type;
- storing the training input in memory;
- vectorising the training input to create a training vector;
- training the machine learning model to identify the person of the predetermined type in an input image using the training vector;
- detecting another person in a different image using image classification; and
- determining, using the machine learning model, whether the another person is of the predetermined type.

2. The method of claim 1,
wherein the machine learning model is a one-class support vector machine.

3. The method of claim 1,
wherein the different image is captured by a camera, further comprising:
- monitoring, in response to determining that the another person is of the predetermined type, the another person using the camera until the another person exists a field of view of the camera;
- generating statistics associated with the another person based on the monitoring; and
- transmitting the statistics to a device.

4. The method of claim 1, further comprising:
- receiving an output from the machine learning model indicating that the another person is of the predetermined type; and
- verifying the output by:
- dividing the different image into a plurality of different image portions;
- generating, for display, the plurality of different image portions on the user interface;
- receiving another selection of at least one portion of the plurality of divided different image portions via the user interface, wherein the another selection is indicative of the another person being of the predetermined type; and
- generating, in response to determining that the another selection comprises the another person, another training input that comprises another training image depicting the another person and another tag indicating that the another person is of the predetermined type.

5. The method of claim 4,
wherein the machine learning model further outputs a confidence score indicative of a probability that the output is correct, and wherein the verifying is performed in response to determining that the confidence score is below a threshold confidence score.

6. The method of any one of claims 1 to 5,
wherein the predetermined type is an employee, and wherein vectorizing the stored training input to create the training vector further comprises:
- identifying at least one feature of the training input for inclusion in the training vector, wherein the at least one feature is one or more of:
- an outline of an employee uniform,
- a color representation of the employee uniform,
- a logo on the employee uniform, or
- presence of a nametag.

7. The method of any one of claims 1 to 6, further comprising:
- determining, prior to dividing the image, whether at least a predetermined amount of a body of the detected person is depicted in the image;
- discarding the image in response to determining that at least the predetermined amount of the body is not depicted; and
- identifying the person in a different image that depicts at least the predetermined amount of the body of the detected person.

8. An apparatus for classifying a predetermined person type in a visual medium, comprising:
- a memory; and
- a processor in communication with the memory and configured to:
- detect a person in an image using image classification;
- generate, on the image, a visual boundary around the detected person;
- divide the image into a plurality of image portions such that multiple images portions partially depict the identified person inside the visual boundary;
- generate, for display, the plurality of image portions on a user interface that prompts a user to select each portion, of the plurality of image portions, that at least partially depicts a person of a predetermined type;
- receive a selection of at least one portion in the divided image via the user interface;
- generate, for a machine learning model and in response to determine that the selection comprises the detected person inside the visual boundary, a training input that comprises a training image depicting contents inside the visual boundary and a tag indicating that the detected person inside the visual boundary is of the predetermined type;
- store the training input in memory;
- vectorize the training input to create a training vector;
- train the machine learning model to identify the person of the predetermined type in an input image using the training vector
- detect another person in a different image using image classification; and
- determine, using the machine learning model, whether the another person is of the predetermined type.

9. The apparatus of claim 8,
wherein the machine learning model is a one-class support vector machine.

10. The apparatus of claim 8,
wherein the different image is captured by a camera, wherein the processor is further configured to:
- monitor, in response to determine that the another person is of the predetermined type, the another person using the camera until the another person exists a field of view of the camera;
- generate statistics associated with the another person based on the monitoring; and
- transmit the statistics to a device.

11. The apparatus of claim 8, wherein the processor is further configured to:
- receive an output from the machine learning model indicating that the another person is of the predetermined type; and
- verify the output by:
- dividing the different image into a plurality of different image portions;
- generating, for display, the plurality of different image portions on the user interface;
- receiving another selection of at least one portion of the plurality of divided different image portions via the user interface, wherein the another selection is indicative of the another person being of the predetermined type; and
- generating, in response to determine that the another selection comprises the another person, another training input that comprises another training image depicting the another person and another tag indicating that the another person is of the predetermined type.

12. The apparatus of claim 11,
wherein the machine learning model further outputs a confidence score indicative of a probability that the output is correct, and wherein the verifying is performed in response to determine that the confidence score is below a threshold confidence score.

13. The apparatus of claim 8,
wherein the predetermined type is an employee, and wherein vectorising the stored training input to create the training vector the processor is further configured to:
- identify at least one feature of the training input for inclusion in the training vector, wherein the at least one feature is one or more of:
- an outline of an employee uniform,
- a color representation of the employee uniform,
- a logo on the employee uniform, or
- presence of a nametag.

14. The apparatus of any one of claims 8 to 13, wherein the processor is further configured to:
- determine, prior to divide the image, whether at least a predetermined amount of a body of the detected person is depicted in the image;
- discard the image in response to determine that at least the predetermined amount of the body is not depicted; and
- identify the person in a different image that depicts at least the predetermined amount of the body of the detected person.

15. A computer-readable medium for classifying a predetermined person type in a visual medium, executable by a processor to perform the method of any one of claims 1 to 7.

## Patentansprüche

1. Verfahren zum Klassifizieren eines vorbestimmten Personentyps in einem visuellen Medium, umfassend:
- Erkennen einer Person in einem Bild mithilfe der Bildklassifizierung;
- Erzeugen einer visuellen Begrenzung um die erkannte Person auf dem Bild;
- Aufteilen des Bildes in eine Vielzahl von Bildabschnitten, sodass mehrere Bildabschnitte die erkannte Person innerhalb der visuellen Begrenzung teilweise darstellen;
- Erzeugen der Vielzahl von Bildabschnitten zur Anzeige auf einer Benutzeroberfläche, die den Benutzer dazu auffordert, jeden Abschnitt aus der Vielzahl von Bildabschnitten auszuwählen, der mindestens teilweise eine Person eines vorbestimmten Typs darstellt;
- Empfangen einer Auswahl mindestens eines Abschnitts aus dem aufgeteilten Bild über die Benutzeroberfläche;
- Erzeugen einer Trainingseingabe für ein Modell des maschinellen Lernens als Reaktion auf das Bestimmen, dass die Auswahl die innerhalb der visuellen Begrenzung erkannte Person umfasst, wobei die Trainingseingabe ein Trainingsbild, das Inhalte innerhalb der visuellen Begrenzung darstellt, sowie eine Kennzeichnung umfasst, die angibt, dass die innerhalb der visuellen Begrenzung erkannte Person dem vorbestimmten Typ entspricht;
- Speichern der Trainingseingabe im Speicher;
- Vektorisieren der Trainingseingabe zur Erstellung eines Trainingsvektors;
- Trainieren des Modells des maschinellen Lernens derart, dass es mithilfe des Trainingsvektors die Person des vorbestimmten Typs in einem Eingabebild identifiziert;
- Erkennen einer anderen Person in einem anderen Bild mithilfe der Bildklassifizierung; und
- Bestimmen mithilfe des Modells des maschinellen Lernens, ob die andere Person dem vorbestimmten Typ entspricht.

2. Verfahren nach Anspruch 1,
wobei das Modell des maschinellen Lernens eine Ein-Klassen-Unterstützungsvektormaschine ist.

3. Verfahren nach Anspruch 1,
wobei das andere Bild von einer Kamera aufgenommen wird, ferner umfassend:
- Überwachen der anderen Person mithilfe der Kamera als Reaktion auf das Bestimmen, dass die andere Person dem vorbestimmten Typ entspricht, bis die andere Person das Sichtfeld der Kamera verlässt;
- Erzeugen von Statistiken in Verbindung mit der anderen Person auf der Grundlage der Überwachung; und
- Übertragen der Statistiken an eine Vorrichtung.

4. Verfahren nach Anspruch 1, ferner umfassend:
- Empfangen einer Ausgabe des Modells des maschinellen Lernens, die angibt, dass die andere Person dem vorbestimmten Typ entspricht; und
- Überprüfen der Ausgabe durch:
- Aufteilen des anderen Bildes in eine Vielzahl verschiedener Bildabschnitte;
- Erzeugen der Vielzahl verschiedener Bildabschnitte zur Anzeige auf der Benutzeroberfläche;
- Empfangen einer anderen Auswahl mindestens eines Abschnitts der Vielzahl der aufgeteilten unterschiedlichen Bildabschnitte über die Benutzeroberfläche, wobei die andere Auswahl darauf hinweist, dass die andere Person dem vorbestimmten Typ entspricht; und
- Erzeugen einer anderen Trainingseingabe als Reaktion auf das Bestimmen, dass die andere Auswahl die andere Person umfasst, wobei die andere Trainingseingabe ein anderes Trainingsbild, das die andere Person darstellt, sowie eine andere Kennzeichnung umfasst, die angibt, dass die andere Person dem vorbestimmten Typ entspricht.

5. Verfahren nach Anspruch 4,
wobei das Modell des maschinellen Lernens ferner einen Konfidenzwert ausgibt, der eine Wahrscheinlichkeit angibt, dass die Ausgabe korrekt ist, und wobei das Überprüfen als Reaktion auf das Bestimmen durchgeführt wird, dass der Konfidenzwert unter einem Schwellenwert für den Konfidenzwert liegt.

6. Verfahren nach einem der Ansprüche 1 bis 5,
wobei es sich bei dem vorbestimmten Typ um einen Mitarbeiter handelt und wobei das Vektorisieren der gespeicherten Trainingseingabe zum Erzeugen des Trainingsvektors ferner umfasst:
- Identifizieren mindestens eines Merkmals der Trainingseingabe zur Aufnahme in den Trainingsvektor, wobei das mindestens eine Merkmal eines oder mehrere der folgenden ist:
- der Umriss einer Mitarbeiteruniform,
- eine farbige Darstellung der Mitarbeiteruniform,
- ein Logo auf der Mitarbeiteruniform, oder
- Vorhandensein eines Namensschilds.

7. Verfahren nach einem der Ansprüche 1 bis 6, ferner umfassend:
- Bestimmen, ob mindestens ein vorbestimmter Teil des Körpers der erkannten Person auf dem Bild dargestellt ist, vor der Aufteilung des Bildes;
- Verwerfen des Bildes als Reaktion auf das Bestimmen, dass mindestens der vorbestimmte Teil des Körpers nicht dargestellt ist; und
- Identifizieren der Person in einem anderen Bild, das mindestens den vorbestimmten Teil des Körpers der erkannten Person darstellt.

8. Vorrichtung zum Klassifizieren eines vorbestimmten Personentyps in einem visuellen Medium, umfassend:
- einen Speicher; und
- einen Prozessor in Kommunikation mit dem Speicher, der konfiguriert ist zum:
- Erkennen einer Person in einem Bild mithilfe der Bildklassifizierung;
- Erzeugen einer visuellen Begrenzung um die erkannte Person auf dem Bild;
- Aufteilen des Bildes in eine Vielzahl von Bildabschnitten, sodass mehrere Bildabschnitte die identifizierte Person innerhalb der visuellen Begrenzung teilweise darstellen;
- Erzeugen der Vielzahl von Bildabschnitten zur Anzeige auf einer Benutzeroberfläche, die den Benutzer dazu auffordert, jeden Abschnitt aus der Vielzahl von Bildabschnitten auszuwählen, der mindestens teilweise eine Person eines vorbestimmten Typs darstellt;
- Empfangen einer Auswahl mindestens eines Abschnitts aus dem aufgeteilten Bild über die Benutzeroberfläche;
- Erzeugen einer Trainingseingabe für ein Modell des maschinellen Lernens als Reaktion auf das Bestimmen, dass die Auswahl die innerhalb der visuellen Begrenzung erkannte Person umfasst, wobei die Trainingseingabe ein Trainingsbild, das Inhalte innerhalb der visuellen Begrenzung darstellt, sowie eine Kennzeichnung umfasst, die angibt, dass die innerhalb der visuellen Begrenzung erkannte Person dem vorbestimmten Typ entspricht;
- Speichern der Trainingseingabe im Speicher;
- Vektorisieren der Trainingseingabe zur Erstellung eines Trainingsvektors;
- Trainieren des Modells des maschinellen Lernens derart, dass es mithilfe des Trainingsvektors die Person des vorbestimmten Typs in einem Eingabebild identifiziert;
- Erkennen einer anderen Person in einem anderen Bild mithilfe der Bildklassifizierung; und
- Bestimmen mithilfe des Modells des maschinellen Lernens, ob die andere Person dem vorbestimmten Typ entspricht.

9. Vorrichtung nach Anspruch 8,
wobei das Modell des maschinellen Lernens eine Ein-Klassen-Unterstützungsvektormaschine ist.

10. Vorrichtung nach Anspruch 8,
wobei das andere Bild von einer Kamera aufgenommen wird, wobei der Prozessor ferner konfiguriert ist zum:
- Überwachen der anderen Person mithilfe der Kamera als Reaktion auf das Bestimmen, dass die andere Person dem vorbestimmten Typ entspricht, bis die andere Person das Sichtfeld der Kamera verlässt;
- Erzeugen von Statistiken in Verbindung mit der anderen Person auf der Grundlage der Überwachung; und
- Übertragen der Statistiken an eine Vorrichtung.

11. Vorrichtung nach Anspruch 8, wobei der Prozessor ferner konfiguriert ist zum:
- Empfangen einer Ausgabe des Modells des maschinellen Lernens, die angibt, dass die andere Person dem vorbestimmten Typ entspricht; und
- Überprüfen der Ausgabe durch:
- Aufteilen des anderen Bildes in eine Vielzahl verschiedener Bildabschnitte;
- Erzeugen der Vielzahl verschiedener Bildabschnitte zur Anzeige auf der Benutzeroberfläche;
- Empfangen einer anderen Auswahl mindestens eines Abschnitts der Vielzahl der aufgeteilten unterschiedlichen Bildabschnitte über die Benutzeroberfläche, wobei die andere Auswahl darauf hinweist, dass die andere Person dem vorbestimmten Typ entspricht; und
- Erzeugen einer anderen Trainingseingabe als Reaktion auf das Bestimmen, dass die andere Auswahl die andere Person umfasst, wobei die andere Trainingseingabe ein anderes Trainingsbild, das die andere Person darstellt, sowie eine andere Kennzeichnung umfasst, die angibt, dass die andere Person dem vorbestimmten Typ entspricht.

12. Vorrichtung nach Anspruch 11,
wobei das Modell des maschinellen Lernens ferner einen Konfidenzwert ausgibt, der eine Wahrscheinlichkeit angibt, dass die Ausgabe korrekt ist, und wobei das Überprüfen als Reaktion auf das Bestimmen durchgeführt wird, dass der Konfidenzwert unter einem Schwellenwert für den Konfidenzwert liegt.

13. Vorrichtung nach Anspruch 8,
wobei es sich bei dem vorbestimmten Typ um einen Mitarbeiter handelt und wobei der Prozessor während des Vektorisierens der gespeicherten Trainingseingabe zum Erzeugen des Trainingsvektors ferner konfiguriert ist zum:
- Identifizieren mindestens eines Merkmals der Trainingseingabe zur Aufnahme in den Trainingsvektor, wobei das mindestens eine Merkmal eines oder mehrere der folgenden ist:
- der Umriss einer Mitarbeiteruniform,
- eine farbige Darstellung der Mitarbeiteruniform,
- ein Logo auf der Mitarbeiteruniform, oder
- Vorhandensein eines Namensschilds.

14. Vorrichtung nach einem der Ansprüche 8 bis 13, wobei der Prozessor ferner konfiguriert ist zum:
- Bestimmen, ob mindestens ein vorbestimmter Teil des Körpers der erkannten Person auf dem Bild dargestellt ist, vor der Aufteilung des Bildes;
- Verwerfen des Bildes als Reaktion auf das Bestimmen, dass mindestens der vorbestimmte Teil des Körpers nicht dargestellt ist; und
- Identifizieren der Person in einem anderen Bild, das mindestens den vorbestimmten Teil des Körpers der erkannten Person darstellt.

15. Computerlesbares Medium zum Klassifizieren eines vorbestimmten Personentyps in einem visuellen Medium, das von einem Prozessor ausgeführt werden kann, um das Verfahren nach einem der Ansprüche 1 bis 7 durchzuführen.

## Revendications

1. Procédé permettant de classifier un type de personne prédéterminé dans un support visuel, comprenant :
- la détection d'une personne dans une image à l'aide de la classification d'images ;
- la génération, sur l'image, d'une limite visuelle autour de la personne détectée ;
- la division de l'image en une pluralité de portions d'image de telle sorte que plusieurs portions d'image représentent partiellement la personne détectée à l'intérieur de la limite visuelle ;
- la génération, pour affichage, de la pluralité de portions d'image sur une interface utilisateur qui invite un utilisateur à sélectionner chaque portion, parmi la pluralité de portions d'image, qui représente au moins partiellement une personne d'un type prédéterminé ;
- la réception d'une sélection d'au moins une portion dans l'image divisée par le biais de l'interface utilisateur ;
- la génération, pour un modèle d'apprentissage automatique et en réponse à la détermination que la sélection comprend la personne détectée à l'intérieur de la limite visuelle, d'une entrée d'entraînement qui comprend une image d'entraînement représentant le contenu à l'intérieur de la limite visuelle et une étiquette indiquant que la personne détectée à l'intérieur de la limite visuelle est du type prédéterminé ;
- le stockage des entrées d'entraînement en mémoire ;
- la vectorisation des entrées d'entraînement pour créer un vecteur d'entraînement ;
- l'entraînement du modèle d'apprentissage automatique pour identifier la personne du type prédéterminé dans une image d'entrée à l'aide du vecteur d'entraînement ;
- la détection d'une autre personne dans une image différente à l'aide de la classification d'images ; et
- la détermination, à l'aide du modèle d'apprentissage automatique, de savoir si l'autre personne est du type prédéterminé.

2. Procédé selon la revendication 1,
dans lequel le modèle d'apprentissage automatique est une machine à vecteurs de support à une seule classe.

3. Procédé selon la revendication 1,
dans lequel l'image différente est capturée par une caméra, comprenant en outre :
- la surveillance, en réponse à la détermination que l'autre personne est du type prédéterminé, de l'autre personne à l'aide de la caméra jusqu'à ce que l'autre personne quitte un champ de vision de la caméra ;
- la génération de statistiques associées à l'autre personne sur la base de la surveillance ; et
- la transmission des statistiques à un dispositif.

4. Procédé selon la revendication 1, comprenant en outre :
- la réception d'une sortie du modèle d'apprentissage automatique indiquant que l'autre personne est du type prédéterminé ; et
- la vérification de la sortie par :
- la division de l'image différente en une pluralité de portions d'image différentes ;
- la génération, pour affichage, de la pluralité de portions d'image différentes sur l'interface utilisateur ;
- la réception d'une autre sélection d'au moins une portion parmi la pluralité de portions d'image différentes divisées par le biais de l'interface utilisateur, dans lequel l'autre sélection indique que l'autre personne est du type prédéterminé ; et
- la génération, en réponse à la détermination que l'autre sélection comprend l'autre personne, d'une autre entrée d'entraînement qui comprend une autre image d'entraînement représentant l'autre personne et une autre étiquette indiquant que l'autre personne est du type prédéterminé.

5. Procédé selon la revendication 4,
dans lequel le modèle d'apprentissage automatique fournit en outre un score de confiance indiquant une probabilité que la sortie soit correcte, et dans lequel la vérification est réalisée en réponse à la détermination que le score de confiance est inférieur à un score de confiance seuil.

6. Procédé selon l'une quelconque des revendications 1 à 5,
dans lequel le type prédéterminé est un employé, et dans lequel la vectorisation de l'entrée d'entraînement stockée pour créer le vecteur d'entraînement comprend en outre :
- l'identification d'au moins une caractéristique de l'entrée d'entraînement pour inclusion dans le vecteur d'entraînement, dans lequel l'au moins une caractéristique est une ou plusieurs parmi :
- un contour d'un uniforme d'employé,
- une représentation des couleurs de l'uniforme d'employé,
- un logo sur l'uniforme d'employé, ou
- une présence d'un badge nominatif.

7. Procédé selon l'une quelconque des revendications 1 à 6, comprenant en outre :
- la détermination, avant la division de l'image, de savoir si au moins une partie prédéterminée d'un corps de la personne détectée est représentée dans l'image ;
- le rejet de l'image en réponse à la détermination qu'au moins la partie prédéterminée du corps n'est pas représentée ; et
- l'identification de la personne dans une image différente qui représente au moins la partie prédéterminée du corps de la personne détectée.

8. Appareil permettant de classifier un type de personne prédéterminé dans un support visuel, comprenant :
- une mémoire ; et
- un processeur en communication avec la mémoire et configuré pour :
- détecter une personne dans une image à l'aide de la classification d'images ;
- générer, sur l'image, une limite visuelle autour de la personne détectée ;
- diviser l'image en une pluralité de portions d'image de telle sorte que plusieurs portions d'image représentent partiellement la personne identifiée à l'intérieur de la limite visuelle ;
- générer, pour affichage, la pluralité de portions d'image sur une interface utilisateur qui invite un utilisateur à sélectionner chaque portion, parmi la pluralité de portions d'image, qui représente au moins partiellement une personne d'un type prédéterminé ;
- recevoir une sélection d'au moins une portion dans l'image divisée par le biais de l'interface utilisateur ;
- générer, pour un modèle d'apprentissage automatique et en réponse afin de déterminer que la sélection comprend la personne détectée à l'intérieur de la limite visuelle, d'une entrée d'entraînement qui comprend une image d'entraînement représentant le contenu à l'intérieur de la limite visuelle et une étiquette indiquant que la personne détectée à l'intérieur de la limite visuelle est du type prédéterminé ;
- stocker les entrées d'entraînement en mémoire ;
- vectoriser les entrées d'entraînement pour créer un vecteur d'entraînement ;
- entraîner le modèle d'apprentissage automatique pour identifier la personne du type prédéterminé dans une image d'entrée à l'aide du vecteur d'entraînement
- détecter une autre personne dans une image différente à l'aide de la classification d'images ; et
- déterminer, à l'aide du modèle d'apprentissage automatique, si l'autre personne est du type prédéterminé.

9. Appareil selon la revendication 8,
dans lequel le modèle d'apprentissage automatique est une machine à vecteurs de support à une seule classe.

10. Appareil selon la revendication 8,
dans lequel l'image différente est capturée par une caméra, dans lequel le processeur est en outre configuré pour :
- surveiller, en réponse afin de déterminer que l'autre personne est du type prédéterminé, l'autre personne à l'aide de la caméra jusqu'à ce que l'autre personne quitte un champ de vision de la caméra ;
- générer des statistiques associées à l'autre personne sur la base de la surveillance ; et
- transmettre les statistiques à un dispositif.

11. Appareil selon la revendication 8, dans lequel le processeur est en outre configuré pour :
- recevoir une sortie du modèle d'apprentissage automatique indiquant que l'autre personne est du type prédéterminé ; et
- vérifier la sortie par :
- la division de l'image différente en une pluralité de portions d'image différentes ;
- la génération, pour affichage, de la pluralité de portions d'image différentes sur l'interface utilisateur ;
- la réception d'une autre sélection d'au moins une portion parmi la pluralité de portions d'image différentes divisées par le biais de l'interface utilisateur, dans lequel l'autre sélection indique que l'autre personne est du type prédéterminé ; et
- la génération, en réponse afin de déterminer que l'autre sélection comprend l'autre personne, d'une autre entrée d'entraînement qui comprend une autre image d'entraînement représentant l'autre personne et une autre étiquette indiquant que l'autre personne est du type prédéterminé.

12. Appareil selon la revendication 11,
dans lequel le modèle d'apprentissage automatique fournit en outre un score de confiance indiquant une probabilité que la sortie soit correcte, et dans lequel la vérification est réalisée en réponse afin de déterminer que le score de confiance est inférieur à un score de confiance seuil.

13. Appareil selon la revendication 8,
dans lequel le type prédéterminé est un employé, et dans lequel lors de la vectorisation des entrées d'entraînement stockées pour créer le vecteur d'entraînement, le processeur est en outre configuré pour :
- identifier au moins une caractéristique de l'entrée d'entraînement pour inclusion dans le vecteur d'entraînement, dans lequel l'au moins une caractéristique est une ou plusieurs parmi :
- un contour d'un uniforme d'employé,
- une représentation des couleurs de l'uniforme d'employé,
- un logo sur l'uniforme d'employé, ou
- une présence d'un badge nominatif.

14. Appareil selon l'une quelconque des revendications 8 à 13, dans lequel le processeur est en outre configuré pour :
- déterminer, avant de diviser l'image, si au moins une partie prédéterminée d'un corps de la personne détectée est représentée dans l'image ;
- rejeter l'image en réponse afin de déterminer qu'au moins la partie prédéterminée du corps n'est pas représentée ; et
- identifier la personne dans une image différente qui représente au moins la partie prédéterminée du corps de la personne détectée.

15. Support lisible par ordinateur permettant de classifier un type de personne prédéterminé dans un support visuel, exécutable par un processeur pour im-plémenter le procédé selon l'une quelconque des revendications 1 à 7.
